# EUROPÄISCHE PATENTSCHRIFT

(11) **EP 1 684 935 B1**
(45) Veröffentlichungstag und Bekanntmachung des Hinweises auf die Patenterteilung: **15.07.2015**
(21) Anmeldenummer: 04797779.8
(22) Anmeldetag: 10.11.2004
(51) Int. Cl.: B23K 26/06

(54) **LASERBEARBEITUNGSMASCHINE UND LASERBEARBEITUNGSVERFAHREN**
LASER MACHINING APPARATUS AND LASER MACHINING METHOD
MACHINE ET PROCEDE D'USINAGE LASER

(30) Priorität: 10.11.2003 DE 10352402
(43) Veröffentlichungstag der Anmeldung: 02.08.2006
(73) Patentinhaber: Sauer GmbH, 55758 Stipshausen (DE)
(72) Erfinder: EITERER, Alfons, 87616 Marktoberdof (DE); HILDEBRAND, Peter, 87459 Pfronten (DE); KUHL, Michael, 87629 Füssen (DE); REISACHER, Martin, 87435 Kempten (DE)
(74) Vertreter: Beetz & Partner mbB
(86) Internationale Anmeldenummer: PCT/EP2004/012723
(87) Internationale Veröffentlichungsnummer: WO 2005/044505

(56) Entgegenhaltungen:
- WO-A-00/18535
- DE-C1- 19 960 797
- US-A- 5 073 687
- US-A- 5 093 548
- US-A- 5 103 073
- US-A- 5 126 532
- US-A1- 2002 056 291
- US-A1- 2002 134 772
- US-B1- 6 462 306

## Beschreibung

Die Erfindung betrifft eine Laserbearbeitungsmaschine gemäß dem Oberbegriff des Anspruchs 1 und ein Laserbearbeitungsverfahren gemäß dem Oberbegriff des Anspruchs 12. Die US 6 462 306 B1 offenbart eine solche Laserbearbeitungsmaschine und ein solches Laserbearbeitungsverfahren.

Es ist bekannt, Werkstücke durch Laserstrahlen zu bearbeiten und hierbei insbesondere Gesenke oder Öffnungen bzw. Bohrungen herzustellen. Die DE 199 60 797 beschreibt beispielsweise ein Verfahren zum Herstellen einer Öffnung in einem metallischen Bauteil. In einem ersten Schritte erfolgt Laserbohren mit bestimmten Laserparametern. In einem zweiten Schritt wird ein nicht zylindrischer Trichter ausgebildet, wobei das metallische Material durch geeignete Wahl der Laserparameter beim Laserabtrag sublimiert wird. Verwendet wird hierzu ein Nd-YAG-Laser.

Aus der WO 00/18535 sind ein Verfahren und eine Vorrichtung zum Materialabtrag aus einer Fläche eines Werkstücks bekannt. Hier werden Gesenke mit vergleichsweise komplexen Oberflächen durch geregelten, schichtweisen Materialabtrag mittels eines geführten Laserstrahls hergestellt.

Nachteil der bekannten Maschinen bzw. Verfahren ist es, daß sie bestimmte Bearbeitungsschritte, die bei der Herstellung bestimmter Gesenke oder Bohrungen auftreten können, nicht oder nur unter ungünstigen Betriebsbedingungen ausführen können. So kann das voluminöse Bohren eines Loches unmöglich bzw. nur unter unverhältnismäßigem Zeitaufwand möglich sein, oder es kann die Ausbildung von Gesenken mit befriedigenden Oberflächen nur ungenügend möglich sein.

Die US-B1-6462306 beschreibt eine Laserbearbeitungsmaschine und ein Verfahren zum Herstellen von Bohrungen im Werkstück. Die beschriebene Maschine kann unabhängige Laserstrahlen auf mehreren Arbeitstellen gleichzeitig führen. Aufgabe der Erfindung ist es, eine Laserbearbeitungsmaschine und ein Laserbearbeitungsverfahren anzugeben, die die effiziente Formung auch komplexer Gesenke oder Löcher erlauben.

Diese Aufgabe wird mit den Merkmalen der unabhängigen Patentansprüche gelöst. Abhängige Patentansprüche sind auf bevorzugte Ausführungsformen der Erfindung gerichtet.

Eine Laserbearbeitungsmaschine weist eine Werkstückhalterung zur Halterung eines Werkstücks auf, eine erste Laserabtragsvorrichtung zur Bearbeitung eines Werkstücks mit ersten Arbeitsparametern und eine zweite Laserabtragsvorrichtung zur Bearbeitung des Werkstücks mit zweiten Arbeitungsparametern, die insbesondere qualitativ und/oder quantitativ unterschiedlich zu den ersten Arbeitsparametern sind.

Die Laserbearbeitungsmachinen können unterschiedliche Laserquellen aufweisen, und ebenso unterschiedliche Optiken, Sensoriken und Steuerungen.

Bei einem Laserbearbeitungsverfahren wird ein Werkstück eingespannt und dann mittels Laserlicht bearbeitet. Ohne Wechsel der Einspannung wird ein erster Bearbeitungsschritt mit einer ersten Laserabtragsvorrichtung mit ersten Arbeitsparametern und ein zweiter Bearbeitungsschritt mit einer zweiten Laserabtragsvorrichtung mit zweiten Arbeitsparametern, die insbesondere qualitativ und/oder quantitativ unterschiedlich zu den ersten Arbeitsparametern sein können, durchgeführt.

Nachfolgend werden bezugnehmend auf die Zeichnungen einzelne Ausführungsformen der Erfindung beschrieben. Es zeigen
- Fig. 1: schematisch eine Gesamtansicht der Laserbearbeitungsmaschine,
- Fig. 2: ein Beispiel eines herzustellenden Werkstücks,
- Fig. 3: schematisch eine Arbeitsweise der ersten Laserabtragsvorrichtung,
- Fig. 4: schematisch die Arbeitsweise einer zweiten Laserabtragsvorrichtung, und
- Fig. 5: schematisch eine Draufsicht auf die Maschine.

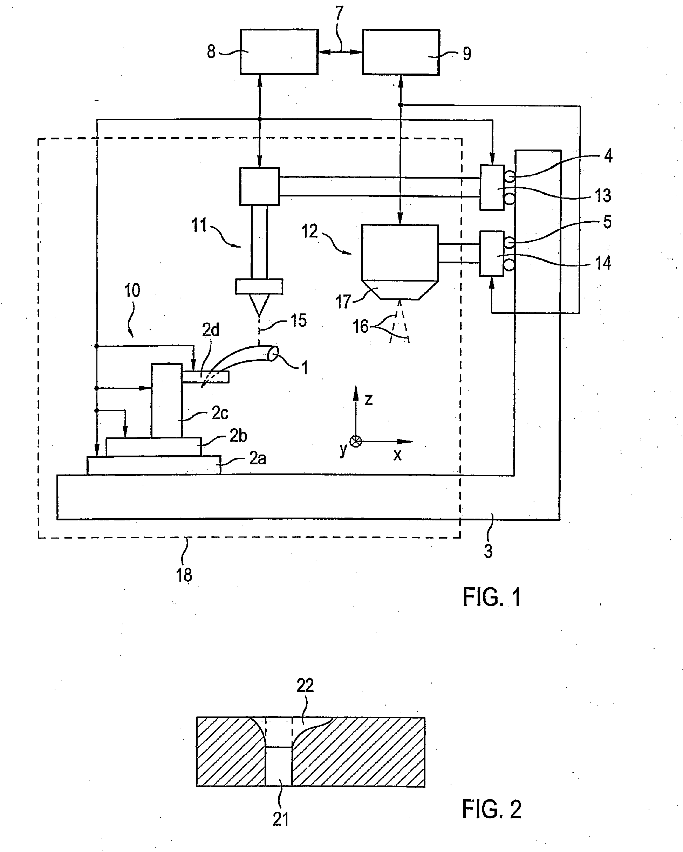

In den beiliegenden Zeichnungen bedeuten gleiche Bezugsziffern gleiche Merkmale bzw. Komponenten. In Fig. 1 bezeichnen 1 ein Werkstück, 10 eine Werkstückhalterung, 2a, 2b, 2c und 2d translatorische und/oder rotatorische Achsen der Werkstückhalterung 10, 11 eine erste Laserabtragsvorrichtung, 12 eine zweite Laserabtragsvorrichtung, 13 eine erste Laserquelle, 14 eine zweite Laserquelle, 15 einen ersten Laserstrahl, 16 einen zweiten Laserstrahl in seinen möglichen Auslenkungen, 17 eine Strahlführung zur Bewirkung der Auslenkungen wie bei 16 gezeigt, 18 ein Maschinengehäuse, 8 eine erste Steuerung, 9 eine zweite Steuerung, 7 eine ggf. zwischen den Steuerungen vorhandene Schnittstelle, 3 bezeichnet einen Maschinenrahmen, und 4 und 5 Stellglieder, mit denen die Laserabtragsvorrichtungen ggf. gegen den Maschinenrahmen verfahren werden können, insbesondere in z-Richtung. Gegebenenfalls genannte Koordinatenachsen seien wie symbolisch dargestellt, also x-Achse in der Zeichenebene nach rechts, y-Achse nach hinten aus der Zeichenebene senkrecht heraus, und z-Achse in der Zeichenebene nach oben.

Die erste Laserabtragsvorrichtung 11 ist eine Laserbohrvorrichtung sein. Die zweite Laserabtragsvorrichtung 12 ist eine Vorrichtung zur Bildung eines Gesenks, insbesondere mit komplexer Oberfläche im Werkstück 1, mit einem Laser. Sie werden mit zueinander unterschiedlichen Arbeitsparametern, Laserparametern, oder Betriebsparametern betrieben, was jedoch die partielle oder zeitweise Gleichheit von bestimmten Betriebsparametern in bestimmten Anwendungsfällen nicht grundsätzlich ausschließt. Auch können die Laser an sich zueinander unterschiedlich sein. So kann einer der Laser ein dioden- oder lampengepumpter Festkörperlaser seien, während der andere Laser ein gütegeschalteter Festkörperlaser sein kann. Weitere Unterschiede hinsichtlich der Parameter zu den einzelnen Laserabtragsvorrichtungen werden weiter unten angegeben.

Eine der Laserabtragsvorrichtungen, in der gezeigten Ausführungsform die Nummer 12, kann eine Laserstrahlführung 17 aufweisen, die den Laserstrahl 16 über die Fläche des Werkstücks führt und so an unterschiedlichen Stellen Abtrag durch Materialaufschmelzung bzw. -verdampfung bewirkt. Schematisch angedeutet sind die linken und rechten Begrenzungen des Arbeitsbereichs des Lasers 16. Die Strahlführung der zweiten Laserabtragsvorrichtung kann Umlenkspiegel aufweisen, beispielsweise zwei orthogonal zueinander wirkende galvanische Spiegel.

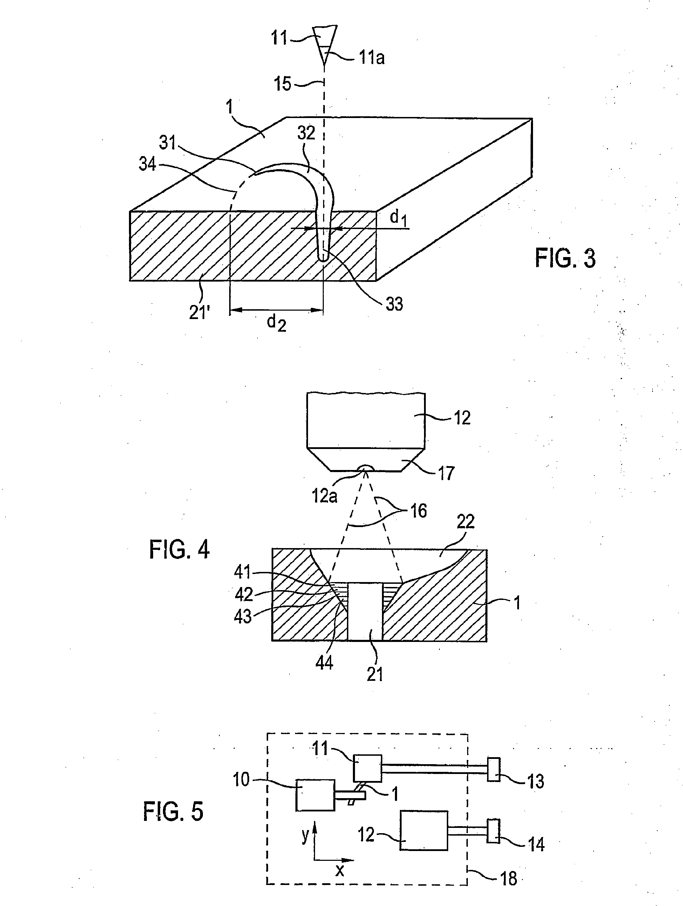

Die andere (erste) Laserbearbeitungsvorrichtung 11 kann in bezug auf die Werkstückhalterung bzw. das Werkstück so ausgelegt sein, daß deren Relativposition zueinander verschieblich ist, was weiter unten bezugnehmend auf Fig. 3 erläutert wird. Die Verschiebung der Relativlage kann durch Verschieben der ersten Laserabtragsvorrichtung 11 erfolgen und/oder durch Verschieben der Werkstückhalterung 10. Die zwei Laserabtragsvorrichtungen 11, 12 können bezüglich einer, vorzugsweise bezüglich zweier, weiter vorzugsweise bezüglich der zwei horizontalen Translationsachsen der Werkstückhalter gegeneinander versetzt angebracht sein, was in Fig. 5 schematisch gezeigt ist. Die zwei Laserabtragsvorrichtungen 11, 12 sind sowohl in x-Richtung als auch in y-Richtung gegeneinander versetzt. Auf diese Weise erhalten sie im begrenzten Innenraum des Maschinengehäuses 18 einen vergleichsweise großen Abstand, so daß Kollisionen bei der Bewegung des Werkstücks vermieden bzw. der Freiheitsgrad bei der Bewegung des Werkstücks vergrößert werden.

Der Laserstrahlauslaß 11a einer der Laserabtragsvorrichtungen, insbesondere der ersten Laserabtragsvorrichtung 11, kann vertikal verschiedlich sein. Insbesondere kann der Laserbohrer vertikal verschieblich sein. Auf diese Weise kann die Strahlgeometrie dem Bohrfortschritt folgen. Wenn der Laserstrahlauslaß verschieblich ist, kann parallel und synchron hierzu die zugeordnete Laserquelle 13 verschieblich sein. In Fig. 1 kann also beispielsweise die erste Laserabtragsvorrichtung 11 mit dem Fortschritt des Bohrlochs im Werkstück nach unten gefahren werden, und die zugehörige Laserquelle 13 folgt ihr synchron und parallel.

Die gesamte Maschine weist ein Gehäuse bzw. eine Kabine 18 auf, die teilweise transparente Flächen aufweisen kann, um den Prozeßfortgang beobachten zu können. Das Gehäuse dient dem Rückhalt von Prozeßgasen und Prozeßprodukten, und ggf. auch der Schallisolation. Es dient auch dem Schutz der Benutzer davor, daß beispielsweise Körperteile in den Strahlengang geraten. Während die eigentlichen Laserabtragsvorrichtungen 11 und 12 in der Kabine 18 selbst vorgesehen sein können, können die Laserquellen 13 und 14 außerhalb der Kabine 18 angebracht sein und das jeweilige Laserlicht durch eine Öffnung und ggf. über einen umgrenzten Strahlengang der jeweiligen Laserabtragsvorrichtung 11, 12 zuführen.

Die zwei Laserabtragsvorrichtungen 11 und 12 können eine gemeinsame oder zueinander unterschiedliche Steuerungen 8 und 9 aufweisen, wobei unterschiedliche Steuerungen 8 und 9 eine Schnittstelle 7 aufweisen können. Die Steuerung der Laserbohrmaschine (erste Laserabtragsvorrichtung 11) kann mit niedrigerer Taktfrequenz arbeiten als die Steuerung der zweiten Laserabtragsvorrichtung. Die Taktfrequenz der zweiten Steuerung 9 kann mindestens das 10-fache, vorzugsweise mindestens das 50-fache der Taktfrequenz der ersten Steuerung 8 betragen.

Die erste Steuerung 8 kann dabei der Steuerung der ersten Laserquelle 13, der ersten Laserabtragsvorrichtung 11 und auch der Werkstückhalterung 10 dienen. Die zweite Steuerung 9 kann der Steuerung der zweiten Laserabtragsvorrichtung 12 mit der Strahlführung 17 und der Laserquelle 14 dienen. Eine Schnittstelle 7 zwischen den beiden Steuerungen 8, 9 kann in der Weise vorgesehen sein, daß die zweite Steuerung 9 durch die erste Steuerung 8 mittelbar bestimmte Maschinenkomponenten steuert, insbesondere beispielsweise Achsen 2 der Werkstückhalterung 10.

Die beiden Abtragsvorrichtungen 11, 12 können in der Weise unabhängig voneinander sein, daß sie getrennte Optiken und Fokussiereinrichtungen (jeweils nicht gezeigt) aufweisen. Die zweite Abtragsvorrichtung 12 kann eine nicht gezeigte Fokuslagensteuerung für den zweiten Laserstrahl 16 aufweisen. Diese Fokuslagensteuerung kann der Steuerung der Fokuslage in z-Richtung dienen.

Auch die jeweils vorhandenen nicht gezeigten Sensoriken können zueinander unterschiedlich sein. Die zweite Laserabtragsvorrichtung 12 kann eine ortsauflösende Tiefensensorik derart aufweisen, daß Zahlentripletts bestehend aus x-, y- und z-Koordinate eines Oberflächenpunkts entsprechend der verfügbaren Auflösung ermittelt werden können.

Die erste Laserabtragsvorrichtung 11 ist eine Laserbohrvorrichtung und sie kann einen oder mehrere der folgenden Arbeitsparameter aufweisen:
- Laserimpulsfrequenz 0,1 bis 100 Hz, vorzugsweise 1 - 30 Hz,
- Laserimpulsdauer 0,1 bis 20 ms, vorzugsweise 0,3 bis 2 ms,
- Pulsspitzenleistung > 1 kW, vorzugsweise > 20 kW,
- mittlere Laserleistung 300 W - 3 kW,
- Energie pro Impuls 1 - 100 J, vorzugsweise 10 - 50 J,
- Laserart: Festkörperlaser, insbesondere dioden- oder lampengepumpter Festkörperlaser.

Die zweite Laserabtragsvorrichtung kann einen oder mehrere der folgenden Arbeitsparameter aufweisen:
- Laserimpulsfrequenz 1 bis 100 kHz, vorzugsweise 10 - 50 kHz,
- Laserimpulsdauer 10 bis 1500 ns, vorzugsweise 100 bis 500 ns,
- Laserleistung 10 - 200 W, vorzugsweise 20 - 50 W,
- Energie pro Impuls 1 - 50 mJ,
- Laserart: gütegeschalteter Festkörperlaser.

Beim erfindungsgemäßen Laserbearbeitungsverfahren wird das Werkstück ohne Wechsel der Einspannung von der ersten und von der zweiten Laserabtragsvorrichtung nacheinander oder auch abwechselnd bearbeitet. Zu diesem Zweck kann es zwischen den beiden Arbeitsfenstern bzw. Arbeitsstellen verfahren werden, insbesondere durch die Werkstückhalterung 10. In einem Bearbeitungsschritt kann beispielsweise eine Bohrung mittels Laser 15 angebracht werden. In einem zweiten Bearbeitungsschritt kann ein komplexer geformtes Gesenk mittels eines anderen Lasers 16 eingebracht werden.

Fig. 2 zeigt ein typisches Produkt: Ein Werkstück 1 ist mit einer Bohrung 21 zu versehen, die an einer Seite mit einer unsymmetrischen trichterförmigen Öffnung 22 versehen werden soll. Als erster Bearbeitungsschritt kann die Ausbildung der Bohrung 21 angesehen werden, die durch das ganze Werkstück 1 hindurch durch die erste Laserabtragsvorrichtung 11 vorgenommen werden kann. Im oberen Teil der Fig. 2 ist dies gestrichelt angedeutet. Die trichterförmige Aufweitung 22 kann dann mit der zweiten Laserabtragsvorrichtung 12 geformt werden.

Zum Formen des Lochs 21 kann Laserstrahl 15 aus der ersten Abtragsvorrichtung 11 verwendet werden. Es kann hier ggf. auf Nachführung der Laserfokussierung entsprechend der fortschreitenden Lochtiefe verzichtet werden, wobei aber insbesondere die Laserabtragsvorrichtung 11 bzw. Teile davon, insbesondere der Laserstrahlauslaß 11a, entsprechend dem Fortschritt des Eindringens des Laserstrahls in das Werkstück in z-Richtung nachgeführt werden können. Beim Laserbohren kann auch Prozeßgas zugeführt werden.

Fig. 3 zeigt eine mögliche Arbeitsweise beim Laserbohren, die entsprechend der in dieser Beschreibung gewählten Terminologie durch die erste Abtragsvorrichtung 11 vorzunehmen wäre. Aus der Auslaßöff-nung 11a des Laserstrahls 15 tritt der Laserstrahl 15 aus und trifft auf das unter ihm liegende Werkstück 1. Die Laserparameter sind so gewählt, daß durch eine Mischung aus Verflüssigung und Verdampfen, evtl. Sublimation und Dampfaustreibung aufgeschmolzenen Materials der Laser sich allmählich in Tiefenrichtung des Werkstücks einbrennt. Er erzeugt dabei ein Loch des Durchmessers d1, der im Bereich einiger 10 oder 100 Mikrometer liegen kann und sogar bis einige wenige Millimeter erreichen kann. Wenn dieser Bohrungsdurchmesser ausreicht, ist mit dem einmaligen Einbrennen bzw. Durchbrennen des Laserstrahls durch das Werkstück der Bohrvorgang beendet.

Wenn dagegen ein Loch größeren Durchmessers geformt werden soll, beispielsweise mit Durchmesser d2, dann kann das Verfahren dahingehend ergänzt werden, daß das Werkstück 1 und die erste Laserbearbeitungsvorrichtung 11 so gegeneinander verfahren werden, daß mit dem Laserstrahl 15 die Außenkontur des gewünschten Lochs langsam abgefahren wird, wie dies durch die gestrichelte Linie 34 angedeutet ist. In Fig. 3 ist 31 als der Anfangspunkt der zu ziehenden Bahn anzusehen. 32 markiert den schon geschnittenen Kanal, und der Laserstrahl befindet sich gerade in der Schnittebene des Werkstücks und wandert dann weiter auf dem Lochumfang um, bis er der Bahn 34 folgend wieder am Ausgangspunkt 31 angelangt ist. Die Relativverschiebung zwischen Laserabtragsvorrichtung 11 und Werkstück 1 kann durch langsame, schrittweise Einstellung der Achsen der Werkstückhalterung 10 erfolgen.

Fig. 4 zeigt das Vorgehen bei der Gesenkbildung, das in der Terminologie dieser Beschreibung mittels der zweiten Laserabtragsvorrichtung 12 vorgenommen wird. Es wird hier das Material schichtweise abgetragen, einige Schichten sind durch die Bezugsziffern 41 bis 44 angedeutet. Die Schichtdicken können einige Mikrometer bis einige 10 Mikrometer betragen. Eine einzelne Schicht wird abgetragen, indem die Fokuslage des Laserstrahls 16 so gesteuert bzw. geregelt wird, daß sie geeignet in bezug auf die gewünschte Schicht liegt, insbesondere in ihr liegt. Dann wird durch die variable Strahlführung 17 der Laserstrahl 16 so über die freiliegende Oberfläche geführt, daß am jeweiligen Auftreffpunkt das Material verdampft oder durch Dampfaustreibung verflüssigten Materials entfernt wird. Die zweite Laserabtragsvorrichtung 12 und das Werkstück 1 können hier in einer festen, unveränderten räumlichen Beziehung zueinander stehen. Es wird dann eine einzelne Schicht mit dem Laserstrahl vollständig abgefahren, z.B. mäandernd, und dann zur nächsten Schicht gegangen, indem die Fokuslage geeignet eingestellt und ggf. auch in Abhängigkeit von der jeweils momentanen x- und y-Koordinate des Auftreffpunkts nachgeführt wird, z. B. zum Ausgleich der Kalotte der Position des Laserfokus. Dies kann teils mechanisch, z. B. durch die Werkstückhalterung 10, und/oder teils optisch durch eine schnell einstellbare und veränderliche Optik ("z-shifter") erfolgen. Auf diese Weise werden einzelne Schichten nacheinander abgetragen, so daß auf diese Weise zuletzt das gewünschte komplex geformte Gesenk hergestellt wird. Es kann hier eine ortsauflösende Tiefensensorik vorhanden sein, die den Fortschritt an den einzelnen Flächenpunkten des Gesenks bzw. die jeweils dort herrschende Tiefe mißt, so daß nach Maßgabe der so gewonnenen Daten Steuerungen bzw. Regelungen bezugnehmend auf gespeicherte Gesenkdaten vorgenommen werden können. Insbesondere können hier die aus einem möglichen früheren Prozeß anhaftende Schmelzspritzer insbesondere auch von Anfang an dreidimensional erfaßt und dann im weiteren Ablauf ausgeregelt werden. Die Strahlführung 17 kann Schwenkspiegel aufweisen, die rechtwinklig zueinander wirkend angeordnet sein können.

Soweit nacheinander Bohrung wie bezugnehmend auf Fig. 3 und Gesenkbildung wie bezugnehmend auf Fig. 4 beschrieben vorzunehmen sind, kann es vorzuziehen sein, zunächst die Bohrung vorzunehmen und dann die Gesenkbildung, da durch die Gesenkbildung genauere Wände hergestellt werden können, die dann nicht mehr durch Anlagerungen aus dem vergleichsweise gröberen Bohrvorgang wieder verschlechtert werden.

Da bei der Gesenkbildung wie bezugnehmend auf Fig. 4 beschrieben die Lage des Fokuspunkts des Laserstrahls 16 in z-Richtung von Bedeutung sein kann, kann es vorgesehen sein, vor Beginn der Gesenkbildung gemäß Fig. 4 die absolute z-Lage der Werkstückoberfläche 1a zu messen. Vorzugsweise geschieht dies dann auch noch, bevor der Bohrvorgang gemäß Fig. 3 stattfindet. Es ist dann eindeutig eine O-berflächenreferenz bekannt, die, da das Verfahren ja ohne Umspannen des Werkstücks erfolgen kann, dann auch über den gesamten Vorgang hinweg erhalten bleibt.

Allgemein kann bei mehreren unterschiedlichen Arbeitsschritten zuerst derjenige mit höherer Laserleistung oder höherer Energie pro Impuls durchgeführt werden und dann derjenige mit niedrigerer Laserleistung bzw. niedrigerer Energie pro Impuls. Dies kann z. B. gewählt werden, wenn befürchtet wird, dass eine mit geringerer Laserleistung hergestellte vergleichsweise feine Oberfläche durch Spritzer eines nachher ausgeführten groberen Vorgangs wieder zerstört wird. Es kann aber auch Anwendungen geben, bei denen die Abfolge genau andersherum ist, also zuerst der Schritt mit niedrigerer Laserleistung oder niedrigerer Energie pro Impuls und dann derjenige mit höherer Laserleistung bzw. höherer Energie pro Impuls. Auch alternierende Vorgehensweisen sind denkbar. Das Bohren kann vor oder nach der Bildung eines fein definierten Gesenks erfolgen.

Die beschriebene Vorrichtung erlaubt die wohlangepaßte Laserbearbeitung unterschiedlicher Bearbeitungsteile bei der Formung eines Werkstücks. Es ist auf diese Weise möglich, die Laserbearbeitungsverfahren nicht nur im Bereich des Prototyping einzusetzen, wo man ja lange Bearbeitungsdauern noch vertreten kann, sondern auch im Bereich der Serienfertigung qualitativ hochstehender Werkstücke.

## Patentansprüche

1. Laserbearbeitungsmaschine, mit
einer Werkstückhalterung (10) zur Halterung eines Werkstücks (1),
einer ersten Laserabtragsvorrichtung (11), die zum Laserbohren das werkstücks mit ersten Arbeitsparametern betrieben werden kann, mit einer ersten Laserquelle (13) und einer ersten Steuerung (8), und
einer zweiten Laserabtragsvorrichtung (12) mit einer zweiten Laserquelle (14), die das Werkstück mit zweiten Arbeitsparametern, die insbesondere qualitativ und/oder quantitativ unterschiedlich zu den ersten Arbeitsparametern sind, bearbeiten kann,
wobei die Laserstrahlauslässe der beiden Laserabtragsvorrichtungen bezüglich mindestens einer, vorzugsweise zweier Achsen, weiter vorzugsweise bezüglich der zwei horizontalen Achsen (x, y) fest gegeneinander versetzt angebracht sind,
**dadurch gekennzeichnet, dass**
die zweite Laserabtragsvorrichtung (12) eine Laserabtragsvorrichtung zur Gesenkbildung durch schichtweisen Materialabtrag ist und eine zweite Steuerung (9) und eine von ihr gesteuerte Strahlführung (17) aufweist, die zum Mater rialabtrag durch aufeinanderfolgendes Abtragen einzelner Schichten (41 - 44) durch Führung des Laserstrahls mittels der Strahlführung (17) über die freiliegende Oberfläche des Werkstücks (1) ausgelegt sind, und mechanische Stellachsen (2) vorgesehen sind, mittels derer das Werkstück bezüglich eines Maschinenrahmens translatorisch so verstellt werden kann, dass es zwischen den Arbeitsfenstern der ersten und der zweiten Laserabtragsvorrichtung verfahrbar ist.

2. Laserbearbeitungsmaschine nach Anspruch 1, **dadurch gekennzeichnet, daß** die erste Laserabtragsvorrichtung eine erste Laserquelle (13) und die zweite Laseräbtragsvorrichtung eine zweite Laserquelle (14) aufweist.

3. Laserbearbeitungsmaschine nach Anspruch 1 oder 2, **dadurch gekennzeichnet, daß** mindestens eine der Laserabtragsvorrichtungen eine Strahlführung (17) aufweist, vorzugsweise mittels einem oder mehreren Umlenkspiegeln.

4. Laserbearbeitungsmaschine nach einem oder mehreren der vorherigen Ansprüche, **dadurch gekennzeichnet, daß** der Laserstrahlauslaß einer oder beider Laserabtragsvorrichtungen bezüglich mindestens einer, vorzugsweise der vertikalen Achse (z) verschieblich ist.

5. Laserbearbeitungsmaschine nach Anspruch 4, **dadurch gekennzeichnet, daß** die Laserquelle parallel mit und synchron zum Laserstrahlauslaß verschieblich ist.

6. Laserbearbeitungsmaschine nach einem oder mehreren der vorherigen Ansprüche, **gekennzeichnet durch** eine erste Steuerung (8) zur Steuerung der ersten Laserabtragsvorrichtung und eine zweite Steuerung (9) zur Steuerung der zweiten Laserabtragsvorrichtung.

7. Laserbearbeitungsmaschine nach Anspruch 6, **dadurch gekennzeichnet, daß** die zweite Steuerung mit einer höheren Taktfrequenz als die erste Steuerung arbeitet.

8. Laserbearbeitungsmaschine nach Anspruch 6 oder 7, **gekennzeichnet durch** eine Schnittstelle (7) zwischen erster und zweiter Steuerung.

9. Laserbearbeitungsmaschine nach einem oder mehreren der vorherigen Ansprüche, **dadurch gekennzeichnet, daß** die erste Laserabtragsvorrichtung eine erste Optik und die zweite Laserabtragsvorrichtung eine zweite Optik aufweist.

10. Laserbearbeitungsmaschine nach einem oder mehreren der vorherigen Ansprüche, **dadurch gekennzeichnet, daß** die erste Laserabtragsvorrichtung eine erste Sensorik und die zweite Laserabtragsvorrichtung eine zweite Sensorik aufweist.

11. Laserbearbeitungsmaschine nach einem oder mehreren der vorherigen Ansprüche, **dadurch gekennzeichnet, daß** die erste Laserabtragsvorrichtungen einen oder mehrere der folgenden Arbeitsparameter aufweisen kann:
• gepulstes Laserlicht, insbesondere Laserimpulsfrequenz 0,1 bis 100 Hz, vorzugsweise 1 - 30 Hz,
• Laserimpulsdauer 0,1 bis 20 ms, vorzugsweise 0,3 bis 2 ms,
• Pulsspitzenleistung > 1 kW, vorzugsweise > 20 kW,
• Laserleistung 300 W - 3 kW,
• Energie pro Impuls 1 - 100 J, vorzugsweise 10 - 50 J,
• Laserart: Festkörperlaser, insbesondere dioden- oder lampengepumpt,
und daß die zweite Laserabtragsvorrichtungen einen oder mehrere der folgenden Arbeitsparameter aufweisen kann:
• gepulstes Laserlicht, insbesondere Laserimpulsfrequenz 1 bis 100 kHz, vorzugsweise 10 - 50 kHz,
• Laserimpulsdauer 10 bis 1500 ns, vorzugsweise 100 bis 500 ns,
• Laserleistung 10 - 200 W, vorzugsweise 20 - 50 W,
• Energie pro Impuls 1 - 50 mJ,
• Laserart: gütegeschalteter Festkörperlaser.

12. Laserbearbeitungsverfahren, bei dem ein Werkstück (1) eingespannt und dann mittels Laserlicht bearbeitet wird, wobei ein erster Bearbeitungsschritt des Laserbohrens mit einer ersten, zur Bearbeitung des Werkstücks (1) erste Arbeitsparameter aufweisende Laserabtragsvorrichtung (11) mit einer ersten Laserquelle (13) und einer ersten Steuerung (8) und ein zweiter Bearbeitungsschritt mit eizweiten, zur Bearbeitung des Werkstück (1) zweite Arbeitsparametern aufweisende Laserabtragsvorrichtung (12) mit einer weiten Laserquelle (14) durchgeführt wird, wobei die zweiten Arbeitsparameter insbesondere qualitativ und/oder quantitativ unterschiedlich zu den ersten Arbeitsparametern sind, wobei die Laser der beiden Laserabtragsvorrichtungen an Laserstrahlauslässen abgestrahlt werden, die bezüglich mindestens einer, vorzugsweise zweier Achsen, weiter vorzugsweise bezüglich der zwei horizontalen Achsen (x, y) fest gegeneinander versetzt angebracht sind,
**dadurch gekennzeichnet, daß**
der zweite Bearbeitungsschritt das Ausbilden eines Gesenks durch schichtweisen Materialabtrag mittels Laser ist, bei dem eine zweite Steuerung (9) eine von ihr gesteuerte Strahlführung derart ansteuert, dass Materialabtrag durch aufeinanderfolgendes Abtragen einzelner Schichten (41 - 44) durch Führung des Laserstrahls mittels der Strahlführung über die freiliegeride O-berfläche des Werkstücks (1) bewirkt wird, und
das Werkstück ohne Wechsel der Einspannung mittels mechanischer Stellachsen (2) bezüglich eines Maschinenrahmens translatorisch so verstellt werden kann, dass es zwischen den Arbeitsfenstern der ersten und der zweiten Laserabtragsvorrichtung verfahren werden kann.

13. Verfahren nach Anspruch 12, **dadurch gekennzeichnet, daß** eine für den zweiten Bearbeitungsschritt notwendige Abstandsmessung vor Vornahme des ersten Bearbeitungsschritts durchgeführt wird.

14. Verfahren nach einem oder mehreren der Ansprüche 12 oder 13, **dadurch gekennzeichnet, daß** beim ersten Bearbeitungsschritt mittels der ersten Laserabtragsvorrichtung die Fokussierung des Laserstrahls fest ist, während beim zweiten Bearbeitungsschritt mittels der zweiten Laserabtragsvorrichtung die Fokussierung des Laserstrahls nachgeführt wird.

15. Verfahren nach einem oder mehreren der Ansprüche 12 bis 14, **dadurch gekennzeichnet, daß** beim ersten Bearbeitungsschritt mittels der ersten Laserabtragsvorrichtung Prozeßgas zugeführt wird.

16. Verfahren nach einem oder mehreren der Ansprüche 12 bis 15, **dadurch gekennzeichnet, daß** beim zweiten Bearbeitungsschritt mittels der zweiten Laserabtragsvorrichtung die Lage des Läserstrahls durch eine variable Strahlführung geführt wird.

17. Verfahren nach einem oder mehreren der Ansprüche 12 bis 16, **dadurch gekennzeichnet, daß** beim ersten Bearbeitungsschritt mittels der ersten Laserabtragsvorrichtung die relative Position der Lage der ersten Laserabtragsvorrichtung zum Werkstück geändert wird.

18. Verfahren nach einem oder mehreren der Ansprüche 12 bis 17, **dadurch gekennzeichnet, daß** zuerst der Bearbeitungsschritt mit höherer Laserleistung und dann der Bearbeitungsschritt mit niedrigerer Laserleistung vorgenommen wird.

## Claims

1. A laser processing machine comprising
a workpiece mount (10) for mounting a workpiece (1),
a first laser ablation device (11), which can be operated for laser drilling the workpiece with first working parameters, having a first laser source (13) and a first control (8), and
a second laser ablation device (12) having a second laser source (14), which can process the workpiece with second working parameters, which are in particular qualitatively and/or quantitatively different from the first working parameters,
wherein the laser beam outlets of the two laser ablation devices are attached fixedly mutually offset with respect to at least one, preferably two axes, further preferably with respect to the two horizontal axes (x, y),
**characterized in that**
the second laser ablation device (12) is a laser ablation device for mold formation by material ablation in layers and has a second control (9) and a beam guide (17) controlled by it, which are configured for material ablation by consecutive ablation of individual layers (41-44) by guiding the laser beam over the exposed surface of the workpiece (1) by means of the beam guide (17), and
mechanical adjusting axes (2) are provided, by means of which the workpiece can be translationally adjusted with respect to a machine frame such that it is movable between the working windows of the first and the second laser ablation device.

2. The laser processing machine according to claim 1, **characterized in that** the first laser ablation device has a first laser source (13) and the second laser ablation device has a second laser source (14).

3. The laser processing machine according to claim 1 or 2, **characterized in that** at least one of the laser ablation devices has a beam guide (17), preferably by means of one or more deflection mirrors.

4. The laser processing machine according to any one or more of the preceding claims, **characterized in that** the laser beam outlet of one or both laser ablation devices is displaceable with respect to at least one, preferably the vertical axis (z).

5. The laser processing machine according to claim 4, **characterized in that** the laser source is displaceable parallel to and synchronously with the laser beam outlet.

6. The laser processing machine according to any one or more of the preceding claims, **characterized by** a first control (8) for controlling the first laser ablation device and a second control (9) for controlling the second laser ablation device.

7. The laser processing machine according to claim 6, **characterized in that** the second control works with a higher clock frequency than the first control.

8. The laser processing machine according to claim 6 or 7, **characterized by** an interface (7) between first and second control.

9. The laser processing machine according to any one or more of the preceding claims, **characterized in that** the first laser ablation device has first optics and the second laser ablation device has second optics.

10. The laser processing machine according to any one or more of the preceding claims, **characterized in that** the first laser ablation device has first sensors and the second laser ablation device has second sensors.

11. The laser processing machine according to any one or more of the preceding claims, **characterized in that** the first laser ablation device can have one or more of the following working parameters:
- pulsed laser light, in particular laser pulse frequency 0.1 to 100 Hz, preferably 1 - 30 Hz,
- laser pulse duration 0.1 to 20 ms, preferably 0.3 to 2 ms,
- pulse peak power > 1 kW, preferably > 20 kW,
- laser power 300 W - 3 kW,
- energy per pulse 1 - 100 J, preferably 10 - 50 J,
- laser type: solid-state laser, in particular diode- or lamp-pumped,
and that the second laser ablation device can have one or more of the following working parameters:
- pulsed laser light, in particular laser pulse frequency 1 to 100 kHz, preferably 10 - 50 kHz,
- laser pulse duration 10 to 1500 ns, preferably 100 to 500 ns,
- laser power 10 - 200 W, preferably 20 - 50 W,
- energy per pulse 1 - 50 mJ,
- laser type: Q-switched solid-state laser.

12. A laser processing method, in which a workpiece (1) is clamped and then processed by means of laser light, wherein there are performed a first processing step of laser drilling with a first laser ablation device (11) having first working parameters for processing the workpiece (1), having a first laser source (13) and a first control (8), and a second processing step with a second laser ablation device (12) having second working parameters for processing the workpiece (1), having a second laser source (14), wherein the second working parameters are in particular qualitatively and/or quantitatively different from the first working parameters,
wherein the lasers of the two laser ablation devices are radiated at laser beam outlets, which are attached fixedly mutually offset with respect to one, preferably two axes, further preferably with respect to the two horizontal axes (x, y),
**characterized in that**
the second processing step is forming a mould by material ablation in layers by means of laser, in which a second control (9) controls a beam guide controlled by it such that material ablation is effected by consecutive ablation of individual layers (41 - 44) by guiding the laser beam over the exposed surface of the workpiece (1) by means of the beam guide, and
the workpiece can be translationally adjusted with respect to a machine frame without changing the clamping by means of mechanical adjusting axes (2) such that it can be moved between the working windows of the first and the second laser ablation device.

13. The method according to claim 12, **characterized in that** a distance measurement required for the second processing step is performed before performing the first processing step.

14. The method according to any one or more of claims 12 or 13, **characterized in that** in the first processing step by means of the first laser ablation device, the focusing of the laser beam is fixed, while in the second processing step by means of the second laser ablation device, the focusing of the laser beam is tracked.

15. The method according to any one or more of claims 12 to 14, **characterized in that** in the first processing step by means of the first laser ablation device, process gas is supplied.

16. The method according to any one or more of claims 12 to 15, **characterized in that** in the second processing step by means of the second laser ablation device, the posture of the laser beam is guided by a variable beam guide.

17. The method according to any one or more of claims 12 to 16, **characterized in that** in the first processing step by means of the first laser ablation device, the relative position of the posture of the first laser ablation device to the workpiece is changed.

18. The method according to any one or more of claims 12 to 17, **characterized in that** the processing step with higher laser power is first performed and then the processing step with lower laser power is performed.

## Revendications

1. Machine d'usinage laser comportant
un support (10) de pièce à usiner pour maintenir une pièce à usiner (1),
un premier dispositif d'enlèvement laser (11) destiné à percer une pièce à usiner sur la base de premiers paramètres de travail, avec une source laser (13) et une première commande (8), et
un deuxième dispositif d'enlèvement laser (12) avec une deuxième source laser (14) destiné à usiner la pièce sur la base de deuxièmes paramètres de travail, lesquels diffèrent des premiers notamment du point de vue qualitatif et/ou quantitatif,
les sorties du faisceau laser des deux dispositifs d'enlèvement laser étant montées serrées et décalées l'une par rapport à l'autre selon au moins un axe, de préférence deux axes, et mieux encore selon les deux axes horizontaux (x, y),
**caractérisée en ce que**
le deuxième dispositif d'enlèvement laser (12) est un dispositif d'enlèvement laser destiné à former une matrice par enlèvement de matériau par couches, présentant une deuxième commande (9) et un guidage de faisceau (17) piloté par cette dernière conçus pour enlever le matériau par couches individuelles successives (41 - 44) en guidant le faisceau laser au moyen du guidage de faisceau (17) sur la surface exposée de la pièce à usiner (1), et **en ce que**
des axes de réglage mécaniques (2) sont prévus, au moyen desquels la pièce à usiner peut être réglée en translation par rapport à un bâti de machine de façon à ce qu'elle se déplace entre les plages de travail du premier et du deuxième dispositif d'enlèvement laser.

2. Machine d'usinage laser selon la revendication 1, **caractérisée en ce que** le premier dispositif d'enlèvement laser présente une première source laser (13) et le deuxième dispositif d'enlèvement laser, une deuxième source laser (14).

3. Machine d'usinage laser selon les revendications 1 ou 2, **caractérisée en ce que** au moins un des dispositifs d'enlèvement laser comporte un guidage de faisceau (17), de préférence par l'intermédiaire d'un ou de plusieurs miroirs de renvoi.

4. Machine d'usinage laser selon une ou plusieurs des revendications précédentes, **caractérisée en ce que** la sortie de faisceau laser de l'un ou des deux dispositifs d'enlèvement laser peut être déplacée selon au moins un axe, de préférence selon l'axe vertical (z).

5. Machine d'usinage laser selon la revendication 4, **caractérisée en ce que** la source laser peut être déplacée en parallèle et de manière synchrone avec la sortie de faisceau laser.

6. Machine d'usinage laser selon une ou plusieurs des revendications précédentes, **caractérisée par** la présence d'une première commande (8) destinée à piloter le premier dispositif d'enlèvement laser, et d'une deuxième commande (9) destinée à piloter le deuxième dispositif d'enlèvement laser.

7. Machine d'usinage laser selon la revendication 6, **caractérisée en ce que** la deuxième commande travaille à une fréquence d'horloge plus élevée que la première commande.

8. Machine d'usinage laser selon les revendications 6 ou 7, **caractérisée par** la présence d'une interface (7) entre la première et la deuxième commande.

9. Machine d'usinage laser selon une ou plusieurs des revendications précédentes, **caractérisée en ce que** le premier dispositif d'enlèvement laser comprend un premier système optique, et le deuxième dispositif d'enlèvement laser, un deuxième système optique.

10. Machine d'usinage laser selon une ou plusieurs des revendications précédentes, **caractérisée en ce que** le premier dispositif d'enlèvement laser comprend un premier système de capteurs, et le deuxième dispositif d'enlèvement laser, un deuxième système de capteurs.

11. Machine d'usinage laser selon une ou plusieurs des revendications précédentes, **caractérisée en ce que** le premier dispositif d'enlèvement laser présente un ou plusieurs des paramètres de travail suivants :
• lumière laser pulsée, en particulier fréquence d'impulsion laser 0,1 à 100 Hz, de préférence 1 - 30 Hz,
• durée d'impulsion laser 0,1 à 20 ms, de préférence 0,3 à 2 ms,
• puissance crête d'impulsion > 1 kW, de préférence > 20 kW,
• puissance laser 300 W - 3 kW,
• énergie par impulsion 1 - 100 J, de préférence 10 - 50 J,
• type de laser : laser à l'état solide, en particulier pompé par diode ou par lampe,
et **en ce que** le deuxième dispositif d'enlèvement laser présente un ou plusieurs des paramètres de travail suivants :
• lumière laser pulsée, en particulier fréquence d'impulsion laser 1 à 100 kHz, de préférence 10 - 50 kHz,
• durée d'impulsion laser 10 à 1 500 ns, de préférence 100 à 500 ns,
• puissance laser 10 - 200 W, de préférence 20 - 50 W,
• énergie par impulsion 1 - 50 mJ,
• type de laser : laser à l'état solide déclenché.

12. Procédé d'usinage laser selon lequel une pièce à usiner (1) est serrée pour être ensuite usinée au moyen d'une lumière laser, une première étape d'usinage du perçage laser étant réalisée avec un premier dispositif d'enlèvement laser (11) destiné à usiner la pièce (1) sur la base de premiers paramètres de travail, avec une première source laser (13) et une première commande (8), et une deuxième étape d'usinage étant réalisée avec un deuxième dispositif d'enlèvement laser (12) destiné à usiner la pièce (1) sur la base de deuxièmes paramètres de travail, avec une deuxième source laser (14), lesdits paramètres de travail différant des premiers notamment du point de vue qualitatif et/ou quantitatif,
les lasers des deux dispositifs d'enlèvement laser étant émis à partir de sorties de faisceau laser montées serrées et décalées l'une par rapport à l'autre selon au moins un axe, de préférence deux axes, et mieux encore selon les deux axes horizontaux (x, y),
**caractérisé en ce que**
la deuxième étape d'usinage consiste en la formation d'une matrice par enlèvement de matériau au laser par couches, une deuxième commande (9) pilotant un guidage de faisceau de façon à enlever le matériau par couches individuelles successives (41 - 44) en guidant le faisceau laser par l'intermédiaire du guidage de faisceau (17) sur la surface exposée de la pièce à usiner (1), et **en ce que**
la pièce à usiner pouvant être réglée, sans changer de serrage et au moyen d'axes de réglage mécaniques (2), en translation par rapport à un bâti de machine de façon à ce qu'elle puisse être déplacée entre les plages de travail du premier et du deuxième dispositif d'enlèvement laser.

13. Procédé selon la revendication 12, **caractérisé en ce que** la deuxième étape d'usinage requiert une mesure de distance avant la réalisation de la première étape d'usinage.

14. Procédé selon une ou plusieurs des revendications 12 ou 13, **caractérisé en ce que**, lors de la première étape d'usinage réalisée au moyen du premier dispositif d'enlèvement laser, le point focal du faisceau laser est fixe, alors que, lors de la deuxième étape d'usinage réalisée au moyen du deuxième dispositif d'enlèvement laser, le point focal du faisceau laser est poursuivi.

15. Procédé selon une ou plusieurs des revendications 12 à 14, **caractérisé en ce que**, lors de la première étape d'usinage réalisée au moyen du premier dispositif d'enlèvement laser, un gaz de traitement est introduit.

16. Procédé selon une ou plusieurs des revendications 12 à 15, **caractérisé en ce que**, lors de la deuxième étape d'usinage réalisée au moyen du deuxième dispositif d'enlèvement laser, la position du faisceau laser est guidée par un guidage de faisceau variable.

17. Procédé selon une ou plusieurs des revendications 12 à 16, **caractérisé en ce que**, lors de la première étape d'usinage réalisée au moyen du premier dispositif d'enlèvement laser, la position relative du premier dispositif d'enlèvement laser par rapport à la pièce à usiner est modifiée.

18. Procédé selon une ou plusieurs des revendications 12 à 17, **caractérisé en ce que** l'on exécute d'abord l'étape d'usinage avec la puissance laser la plus élevée, puis l'étape d'usinage avec la puissance laser la moins élevée.
